# EUROPÄISCHE PATENTANMELDUNG

(11) **EP 4 427 567 A1**
(43) Veröffentlichungstag der Anmeldung: **11.09.2024**
(21) Anmeldenummer: 23160325.9
(22) Anmeldetag: 07.03.2023
(51) Int. Cl.: A01C 17/00

(54) **MEHRFACHDÜNGERSTREUER**

(71) Anmelder: Amazonen-Werke H. Dreyer SE & Co. KG, 49205 Hasbergen (DE)
(72) Erfinder: Kühn, Christoph, 49186 Bad Iburg (DE); Wessels, Thomas, 49080 Osnabrück (DE); Große Brinkhaus, Andre, 48149 Münster (DE)
(74) Vertreter: Grünecker Patent- und Rechtsanwälte PartG mbB

(57) **Zusammenfassung**

Landwirtschaftliches Gerät (1) zum Ausbringen von Streugut, wie beispielsweise Dünger und/oder Saatgut, umfassend eine erste Ausbringvorrichtung (4) für ein erstes Streugut, eine zweite Ausbringvorrichtung (5) für ein zweites Streugut, eine erste Sensoranordnung (10), die dazu ausgebildet ist, zur Bestimmung eines Streugutfächers das erste Streugut zu erfassen, das von der ersten Ausbringvorrichtung (4) ausgebracht wird und eine zweite Sensoranordnung (11), die dazu ausgebildet ist, zur Bestimmung eines Streugutfächers das zweite Streugut zu erfassen, das von der zweiten Ausbringvorrichtung (5) ausgebracht wird, wobei die erste Ausbringvorrichtung (4) oberhalb der zweiten Ausbringvorrichtung (5) angeordnet ist, und wobei die erste Sensoranordnung (10) so angeordnet und/oder ansteuerbar ist, dass eine Erfassung des zweiten Streuguts durch die erste Sensoranordnung (10) unterdrückt wird und/oder wobei die zweite Sensoranordnung (11) so angeordnet und/oder ansteuerbar ist, dass eine Erfassung des ersten Streuguts durch die zweite Sensoranordnung (11) unterdrückt wird.

## Beschreibung

### Technisches Gebiet

Die Erfindung betrifft ein landwirtschaftliches Gerät zum Ausbringen von Streugut, wie beispielsweise Dünger und/oder Saatgut.

### Hintergrund

Derartige landwirtschaftliche Geräte sind generell bekannt, beispielsweise als Schleuderstreuer. Es ist auch bekannt, dass mit solchen Streuern ein gleichzeitiges Ausbringen von mehr als einer Materialsorte möglich ist.

So beschreibt die EP 0 497 166 A1 einen Schleuderdüngerstreuer, bei welchem Verteilerorgane für verschiedene Düngersorten in unterschiedlichen Höhen zueinander angeordnet sind, so dass sich die Streufächer der unterschiedlichen Düngersorten ungestört ausbilden können. Die DE 197 42 441 A1 befasst sich mit einem ähnlichen Schleuderstreuer mit zwei Vorratsbehältern und jeweils den Vorratsbehältern zugeordneten Dosier- und Verteilorganen, der weiterhin Sensorelemente zur Erfassung der von den Verteilorganen erzeugten Streufächer aufweist.

Bei den bekannten Schleuderdüngerstreuen kann es jedoch schwierig sein, den von einem Sensorelement erfassten Streufächer einer der Materialsorten zuzuordnen. Der Erfindung liegt daher die Aufgabe zugrunde, ein landwirtschaftliches Gerät anzugeben, mit dem das ausgebrachte Material besser erfasst werden kann.

### Zusammenfassung

Diese Aufgabe wird gelöst durch ein landwirtschaftliches Gerät gemäß Anspruch 1. Bevorzugte Ausführungsformen sind in den abhängigen Ansprüchen beschrieben.

Das landwirtschaftliche Gerät zum Ausbringen von Streugut, wie beispielsweise Dünger und/oder Saatgut, umfasst eine erste Ausbringvorrichtung für ein erstes Streugut, eine zweite Ausbringvorrichtung für ein zweites Streugut, eine erste Sensoranordnung, die dazu ausgebildet ist, zur Bestimmung eines Streugutfächers das erste Streugut zu erfassen, das von der ersten Ausbringvorrichtung ausgebracht wird, und eine zweite Sensoranordnung, die dazu ausgebildet ist, zur Bestimmung eines Streugutfächers das zweite Streugut zu erfassen, das von der zweiten Ausbringvorrichtung ausgebracht wird. Die erste Ausbringvorrichtung ist oberhalb der zweiten Ausbringvorrichtung angeordnet. Die erste Sensoranordnung ist dabei derart angeordnet und/oder ansteuerbar, dass eine Erfassung des zweiten Streuguts durch die erste Sensoranordnung unterdrückt wird. Alternativ oder zusätzlich ist die zweite Sensoranordnung derart angeordnet und/oder ansteuerbar, dass eine Erfassung des ersten Streuguts durch die zweite Sensoranordnung unterdrückt wird.

Es ist möglich, dass das erste Streugut eine erste Streugutsorte und das zweite Streugut eine zweite Streugutsorte umfasst. Dabei ist es möglich, dass die erste Streugutsorte von der zweiten Streugutsorte verschieden ist. Es ist auch möglich, dass das erste Streugut und das zweite Streugut dieselbe Streugutsorte umfassen. Das erste und/oder das zweite Streugut können einen Dünger, insbesondere einen Mineraldünger, umfassen.

Es ist möglich, dass jeweils ein separater Streugutfächer für das erste und das zweite Streugut bestimmt wird. Es ist auch möglich, dass ein gemeinsamer Streugutfächer für das erste und das zweite Streugut bestimmt wird.

Hier und im Folgenden beziehen sich die Begriffe "oberhalb" und "in Fahrtrichtung" auf die relative Anordnung von bestimmten Elementen des landwirtschaftlichen Geräts während des Betriebs des landwirtschaftlichen Geräts.

Bei dem landwirtschaftlichen Gerät kann es sich um einen Streuer, insbesondere einen Düngerstreuer handeln. Der Düngerstreuer kann insbesondere ein Zentrifugaldüngerstreuer sein. Der Steuer kann ein gezogener, ein selbstfahrender oder ein Anbaustreuer sein. Die erste und/oder zweite Ausbringvorrichtung können jeweils eine Dosiervorrichtung umfassen. Die erste und/oder zweite Ausbringvorrichtung können jeweils eine Streuscheibe umfassen. Es ist auch möglich, dass die erste und/oder zweite Ausbringvorrichtung jeweils mehrere, insbesondere zwei, Streuscheiben umfasst. Jeder Streuscheibe der ersten und/oder zweiten Ausbringvorrichtung kann jeweils eine Dosiervorrichtung zugeordnet sein. Die Streuscheiben können individuell, beispielsweise durch eine Steuervorrichtung des landwirtschaftlichen Geräts, ansteuerbar sein. Insbesondere ist es möglich, dass Betriebsparameter der ersten und/oder zweiten Ausbringvorrichtung, wie beispielsweise Menge des Streuguts, Drehzahl einer Streuscheibe oder der Aufgabepunkt des Düngers auf eine Streuscheibe, individuell für jede Streuscheibe der ersten und/oder zweiten Ausbringvorrichtung eingestellt werden können.

Die erste und/oder die zweite Sensoranordnung können einen oder mehrere Sensoren zur optischen Erfassung von Streugut umfassen. Alternativ oder zusätzlich können die erste und/oder die zweite Sensoranordnung dazu ausgebildet sein, Streugut mittels Reflexion von elektromagnetischen Wellen und/oder Schallwellen zu erfassen. Insbesondere können die erste und/oder zweite Sensoranordnung mindestens einen Schallsender, insbesondere einen Ultraschallsender und einen entsprechenden Empfänger oder einen Sender für elektromagnetische Wellen, insbesondere Radarwellen, und einen entsprechenden Empfänger umfassen. Es ist möglich, dass die erste und/oder die zweite Sensoranordnung nach dem Dopplerprinzip arbeiten. Auf diese Art und Weise kann die Flugrichtung und/oder - geschwindigkeit und/oder Wurfweite des ausgebrachten Streuguts und/oder die Verteilung des Streuguts um die Ausbringvorrichtung bestimmt werden. Dabei kann beispielsweise das ausgebrachte Streugut während des Flugs mittels des Senders mit Schallwellen oder elektromagnetischen Wellen beaufschlagt werden, und die Eigenschaften der am Streugut reflektierten Strahlung, wie beispielsweise Intensität und Frequenz, mittels des Detektors gemessen werden. Die ermittelte Flugrichtung und/oder -geschwindigkeit und/oder Wurfweite und/oder Verteilung des Streuguts kann weiterhin, beispielsweise in einer Steuervorrichtung des landwirtschaftlichen Geräts, mit Sollwerten verglichen werden.

Das landwirtschaftliche Gerät kann eine Steuervorrichtung umfassen. Bei der Steuervorrichtung kann es sich beispielsweise um einen Bordrechner des landwirtschaftlichen Geräts oder eines Zugfahrzeugs des landwirtschaftlichen Geräts handeln. Die Steuervorrichtung kann mit der ersten und der zweiten Sensoranordnung sowie der ersten und der zweiten Ausbringvorrichtung verbunden sein. Die Steuervorrichtung kann dazu ausgebildet sein, Signale von der ersten und der zweiten Sensoranordnung zu empfangen. Die Steuervorrichtung kann dazu ausgebildet sein, Steuersignale die erste und zweite Ausbringvorrichtung zu senden. Die Steuervorrichtung kann dazu ausgebildet sein, Steuersignale an die erste und die zweite Sensoranordnung zu senden.

Die Steuervorrichtung kann dazu konfiguriert sein, die erste und/oder zweite Ausbringvorrichtung basierend auf den Sensordaten der ersten und/oder zweiten Sensoranordnung zu steuern und/oder zu regeln.

Beispielsweise kann die Steuervorrichtung dazu konfiguriert sein, von der ersten und zweiten Sensoranordnung erfasste Streuwerte des Streuguts, beispielsweise Flugrichtung und/oder - geschwindigkeit und/oder Wurfweite und/oder von den erfassten Streuwerten abgeleitete Größen wie Arbeitsbreite oder Abwurfwinkel des Streuguts, mit hinterlegten Sollwerten zu vergleichen.

Bei einer Abweichung der erfassten Eigenschaften von den Sollwerten, insbesondere bei einer Abweichung um mehr als einen vorgegebenen Schwellenwert, kann die Steuervorrichtung dazu konfiguriert sein, Arbeitsparameter der entsprechenden Ausbringvorrichtung, wie Schleuderscheibendrehzahl, Dosierschieberstellung oder Anpassung eines Aufgabepunkts des Streuguts auf eine Streuscheibe, entsprechend anzupassen, um eine Anpassung an die Sollwerte zu erreichen.

Es ist insbesondere möglich, dass die Steuervorrichtung dazu konfiguriert ist, die erste und die zweite Ausbringvorrichtung aufgrund der erfassten Streuwerte des Streuguts derart anzusteuern, dass das erste Streugut und das zweite Streugut mit derselben Arbeitsbreite ausgebracht werden. Weiterhin kann die Steuervorrichtung dazu konfiguriert sein, die die erste und die zweite Ausbringvorrichtung derart anzusteuern, dass die Arbeitsbreite während des Betriebs des landwirtschaftlichen Geräts konstant gehalten wird.

Die Steuervorrichtung kann weiterhin dazu konfiguriert sein, bei der Ansteuerung der ersten und der zweiten Ausbringvorrichtung zusätzliche Eigenschaften des ersten und des zweiten Streuguts, wie beispielsweise Korngröße, Masse, Korngeometrie oder Dichte zu berücksichtigen. Weiterhin kann die Steuervorrichtung dazu konfiguriert sein, Umwelteinflüsse, wie beispielsweise Windgeschwindigkeiten und/oder -richtungen, bei der Ansteuerung der ersten und der zweiten Ausbringvorrichtung zu berücksichtigen. Das landwirtschaftliche Gerät kann hierzu Sensoren zur Bestimmung von Umwelteinflüssen aufweisen.

Es ist möglich, dass die erste Sensoranordnung eine erste Gruppe von Sensoren aufweist, die dazu ausgebildet sind, Streugut zu erfassen, das von einer ersten Streuscheibe der ersten Ausbringvorrichtung ausgebracht wird. Weiterhin kann die erste Sensoranordnung eine zweite Gruppe von Sensoren aufweist, die dazu ausgebildet sind, Streugut zu erfassen, das von einer zweiten Streuscheibe der ersten Ausbringvorrichtung ausgebracht wird. Mit anderen Worten ist es möglich, dass jeder Streuscheibe der ersten Ausbringvorrichtung ein dedizierter Sensor oder mehrere dedizierte Sensoren zugeordnet sind. Die Sensoren können dabei eines oder mehrere der oben beschriebenen Merkmale aufweisen.

Analog ist es möglich, dass die zweite Sensoranordnung eine erste Gruppe von Sensoren aufweist, die dazu ausgebildet sind, Streugut zu erfassen, das von einer ersten Streuscheibe der zweiten Ausbringvorrichtung ausgebracht wird. Weiterhin kann die zweite Sensoranordnung eine zweite Gruppe von Sensoren aufweisen, die dazu ausgebildet sind, Streugut zu erfassen, das von einer zweiten Streuscheibe der zweiten Ausbringvorrichtung ausgebracht wird. Mit anderen Worten ist es möglich, dass jeder Streuscheibe der zweiten Ausbringvorrichtung ein dedizierter Sensor oder mehrere dedizierte Sensoren zugeordnet sind. Die Sensoren können dabei eines oder mehrere der oben beschriebenen Merkmale aufweisen.

Erfindungsgemäß kann durch die eine Anordnung der ersten Sensoranordnung dergestalt, dass eine Erfassung der zweiten ausgebrachten Streugutsorte durch die erste Sensoranordnung unterdrückt wird, die Bestimmung der Verteilung des ersten Streuguts verbessert werden. Insbesondere kann verhindert werden, dass Messungen des zweiten Streuguts fälschlicherweise in die Bestimmung der Verteilung des ersten Streuguts einfließen. Auch durch die alternative oder zusätzlich vorgesehene Ansteuerbarkeit der ersten Sensoranordnung kann die Erfassung des ersten Streuguts verbessert werden.

Die erste Sensoranordnung kann oberhalb und in Fahrtrichtung nach vorne versetzt zu der zweiten Ausbringvorrichtung angeordnet sein.

Bei den aus dem Stand der Technik bekannten Schleuderstreuern mit zwei übereinander angeordneten Verteilorganen sind die oberen Verteilorgane mit ihren zugehörigen Sensorelementen üblicherweise in Fahrtrichtung nach hinten versetzt über den unteren Verteilorganen angeordnet.

Dadurch, dass bei der vorliegenden Erfindung im Gegensatz dazu die erste Sensoranordnung oberhalb und in Fahrtrichtung nach vorne versetzt zu der zweiten Ausbringvorrichtung angeordnet sein kann, kann der Abstand zwischen dem Material, das von der zweiten Ausbringvorrichtung ausgebracht wird, und der ersten Sensoranordnung vergrößert werden. Insbesondere kann damit der Abstand zwischen der ersten Sensoranordnung und einer Trajektorie, die das zweite Streugut nach dem Austritt aus der zweiten Ausbringvorrichtung beschreibt, im Vergleich zum Stand der Technik vergrößert werden. Dieser vergrößerte Abstand kann dazu führen, dass eine Erfassung des zweiten Streuguts durch die erste Sensoranordnung unterdrückt wird, da sich das zweite Streugut nach dem Austritt aus der zweiten Ausbringvorrichtung nicht im Sichtfeld oder lediglich am Rand des Sichtfelds der ersten Sensoranordnung befindet.

Der Versatz in Fahrtrichtung der ersten Sensoranordnung gegenüber der zweiten Ausbringvorrichtung kann zwischen 0,1 m und 2,5 m, insbesondere zwischen 0,3 m und 1,5 m betragen. Durch eine solche Wahl des Abstands kann erreicht werden, dass die Erfassung des zweiten Streuguts durch die erste Sensoranordnung verringert wird, während gleichzeitig die Erfassung des ersten Streuguts durch die erste Sensoranordnung nicht beeinträchtigt wird. Mit anderen Worten kann damit das Sichtfeld der ersten Sensoranordnung optimiert werden.

Dabei kann der Versatz in Fahrtrichtung zwischen der ersten Sensoranordnung und der zweiten Ausbringvorrichtung beispielsweise wie folgt bestimmt werden: Es wird ein erstes Lot, also eine vertikale Achse, die senkrecht zum Boden ist, ermittelt, wobei das erste Lot durch denjenigen Sensor der ersten Sensoranordnung verläuft, der in Fahrtrichtung am weitesten hinten an dem landwirtschaftlichen Gerät angeordnet ist. Es wird weiterhin ein zweites Lot bestimmt, welches durch einen Punkt verläuft, der sich an einem in Fahrtrichtung hinten liegenden Punkt der zweiten Ausbringvorrichtung befindet, beispielsweise an der in Fahrtrichtung hinten liegenden Kante einer Streuscheibe der zweiten Ausbringvorrichtung. Das erste und das zweite Lot werden auf eine Ebene projiziert, die senkrecht zum Boden verläuft und parallel zur Fahrtrichtung ist, mit anderen Worten auf eine Seitenansicht der Maschine. Der Abstand zwischen der Projektion des ersten Lots und der Projektion des zweiten Lots in dieser Ebene kann dann dem Versatz zwischen der ersten Sensoranordnung und der zweiten Sensoranordnung entsprechen.

Insbesondere in dem Fall, dass die Sensoren der ersten Sensoranordnung rotationsymmetrisch angeordnet sind, und die zweite Ausbringvorrichtung ebenfalls eine Rotationssymmetrie aufweist, kann der Versatz zwischen der ersten Sensoranordnung und der zweiten Ausbringvorrichtung auch über den Abstand der jeweiligen Symmetrieachsen bestimmt werden. Sollten die Symmetrieachsen nicht parallel zueinander verlaufen, so kann der Versatz analog zu der weiter oben beschriebenen Methode durch die Bildung von Loten, die jeweils durch den Mittelpunkt der ersten Sensoranordnung und der zweiten Ausbringvorrichtung verlaufen, bestimmt werden.

Alternativ kann die erste Sensoranordnung auch ohne einen Versatz in oder gegen die Fahrtrichtung oberhalb von der zweiten Ausbringvorrichtung angeordnet sein. Mit anderen Worten kann die erste Sensoranordnung im Wesentlichen direkt oberhalb von der zweiten Ausbringvorrichtung angeordnet sein. Auch durch eine solche Anordnung kann im Vergleich zum Stand der Technik bereits ein vergrößerter Abstand zwischen der ersten Sensoranordnung und einer Trajektorie, die das zweite Streugut nach dem Austritt aus der zweiten Ausbringvorrichtung beschreibt, mit den oben beschriebenen Vorteilen erreicht werden.

Das landwirtschaftliche Gerät kann ein Trennelement umfassen, die zwischen der ersten Sensoranordnung und der zweiten Ausbringvorrichtung angeordnet ist. Unter einem Trennelement ist hierbei ein Element zu verstehen, welches das Sichtfeld der ersten Sensoranordnung derart einschränkt, dass die Erfassung des zweiten Streuguts von durch die erste Sensoranordnung unterdrückt wird. Ein solches Trennelement kann beispielsweise eine Scheibe umfassen oder als Scheibe ausgebildet sein. Es ist auch möglich, dass das Trennelement eine Gitterstruktur umfasst. In diesem Fall ist es insbesondere möglich, dass das Gitter einen Gitterabstand aufweist, welcher kleiner ist als eine Wellenlänge einer elektromagnetischen Strahlung oder einer Schallwelle, die von der ersten und/oder zweiten Sensoranordnung ausgesendet wird.

Durch ein solches Trennelement kann die die Erfassung des zweiten Streuguts, das von der zweiten Ausbringvorrichtung ausgebracht wird, durch die erste Sensoranordnung zusätzlich unterdrückt werden.

Das Trennelement kann ein Material umfassen oder aus einem Material bestehen, welches intransparent für elektromagnetische Wellen, insbesondere Radarwellen und/oder Schallwellen, insbesondere Ultraschallwellen, ist. Insbesondere kann die Trennscheibe einen Schaumstoff umfassen oder aus einem Schaumstoff bestehen. Durch die Verwendung eines solchen Materials kann verhindert werden, dass elektromagnetische Wellen und/oder Schallwellen, die von der ersten Sensoranordnung ausgesendet werden, von der zweiten Sensoranordnung erfasst werden, und umgekehrt.

Das Trennelement kann sich über die gesamte Maschinenbreite erstrecken. Es ist auch möglich, dass das Trennelement so dimensioniert ist, dass es den Detektionsbereich der ersten Sensoranordnung unter Berücksichtigung des Öffnungswinkels der Sensoren der ersten Sensoranordnung und der Entfernung der Sensoren von dem Trennelement über die gesamte Breite der Maschine abdeckt. Mit anderen Worten können bei einer geringeren Entfernung der Sensoren von dem Trennelement und/oder einem geringen Öffnungswinkel der Sensoren die Abmessungen des Trennelements entsprechend verkleinert werden. So kann erreicht werden, dass das ausgebrachte zweite Streugut ausreichend von der ersten Sensoranordnung abgeschirmt wird, ohne dabei die Ausbringung des ersten und/oder zweiten Streuguts zu beeinträchtigen.

Das Trennelement kann als flächiges Element ausgebildet sein. Das Trennelement kann parallel zum Boden angeordnet sein. Es ist auch möglich, dass das Trennelement parallel zu einem Element der ersten oder zweiten Ausbringvorrichtung, beispielsweise einer Wurfschaufel, angeordnet ist. Es ist weiterhin möglich, dass das Trennelement in Richtung, insbesondere annähernd parallel, zu einem Teil, insbesondere dem anfänglichen Verlauf, der Flugkurve des ersten oder zweiten Streuguts angeordnet ist.

Die erste Sensoranordnung kann so angeordnet sein, dass eine Messrichtung der ersten Sensoranordnung von unten nach oben verläuft. Mit anderen Worten kann die erste Sensoranordnung von unten auf das von der ersten Ausbringvorrichtung ausgebrachte erste Streugut gerichtet sein. Insbesondere kann die erste Sensoranordnung unterhalb von der ersten und oberhalb von der zweiten Ausbringvorrichtung angeordnet sein. Bei einer solchen Ausrichtung der ersten Sensoranordnung kann eine Erfassung des zweiten Streuguts durch die erste Sensoranordnung im Wesentlichen vollständig unterdrückt werden.

Die zweite Sensoranordnung kann so angeordnet sein, dass eine Messrichtung der ersten Sensoranordnung von oben nach unten verläuft. Mit anderen Worten kann die zweite Sensoranordnung von oben auf das von der zweiten Ausbringvorrichtung ausgebrachte zweite Streugut gerichtet sein. Insbesondere kann die zweite Sensoranordnung unterhalb von der ersten und oberhalb von der zweiten Ausbringvorrichtung angeordnet sein. Bei einer solchen Ausrichtung der zweiten Sensoranordnung kann eine Erfassung des ersten Streuguts durch die zweite Sensoranordnung im Wesentlichen vollständig unterdrückt werden.

Die erste Sensoranordnung kann direkt an oder in unmittelbarere Nähe zu der ersten Ausbringvorrichtung angeordnet sein. Es ist möglich, dass mehrere Elemente der ersten Sensoranordnung konzentrisch um eine Drehachse einer Streuscheibe der ersten Ausbringvorrichtung angeordnet sind. Insbesondere kann jeder Streuscheibe der ersten Ausbringvorrichtung eine Gruppe von Elementen der ersten Sensoranordnung zugeordnet sein, wobei die Elemente jeweils konzentrisch um eine Drehachse der jeweiligen Streuscheibe angeordnet sind.

Die zweite Sensoranordnung kann direkt an oder in unmittelbarere Nähe zu der zweiten Ausbringvorrichtung angeordnet sein. Es ist möglich, dass mehrere Elemente der zweiten Sensoranordnung konzentrisch um eine Drehachse einer Streuscheibe der zweiten Ausbringvorrichtung angeordnet sind. Insbesondere kann jeder Streuscheibe der zweiten Ausbringvorrichtung eine Gruppe von Elementen der zweiten Sensoranordnung zugeordnet sein, wobei die Elemente jeweils konzentrisch um eine Drehachse der jeweiligen Streuscheibe angeordnet sind.

Durch die eben beschriebene Anordnung der jeweiligen Sensoranordnung direkt an oder in unmittelbarer Nähe zu der jeweiligen Ausbringvorrichtung kann erreicht werden, dass die jeweilige Sensoranordnung das jeweilige Streugut direkt nach dem Austritt aus der Ausbringvorrichtung optimal erfassen kann.

Bei einer Anordnung der jeweiligen Sensoranordnung direkt an oder in unmittelbarer Nähe zu der jeweiligen Ausbringvorrichtung kann die erste Ausbringvorrichtung oberhalb und in Fahrtrichtung nach vorne versetzt zu der zweiten Ausbringvorrichtung angeordnet sein. Dabei kann der Versatz der ersten Ausbringvorrichtung in Fahrtrichtung zu der zweiten Ausbringvorrichtung zwischen 0,1 m und 2,5 m, insbesondere zwischen 0,3 m und 1,5 m betragen. Durch eine derartige Anordnung kann die Erfassung des ersten und zweiten Streuguts optimiert werden, während gleichzeitig eine kompakte Bauweise des landwirtschaftlichen Geräts ermöglicht wird. Der Versatz der ersten Ausbringvorrichtung in Fahrtrichtung zu der zweiten Ausbringvorrichtung kann dabei beispielsweise analog zu der oben beschriebenen Methode durch die Bildung von Loten bestimmt werden, wobei die Lote jeweils durch einen hinten liegenden Punkt der ersten und zweiten Ausbringvorrichtung oder durch die jeweiligen Mittelpunkte der ersten und der zweiten Ausbringvorrichtung verlaufen können.

Alternativ kann die erste Ausbringvorrichtung in diesem Fall auch ohne einen Versatz in oder gegen die Fahrtrichtung oberhalb von der zweiten Ausbringvorrichtung angeordnet sein. Mit anderen Worten kann die erste Ausbringvorrichtung im Wesentlichen direkt oberhalb von der zweiten Ausbringvorrichtung angeordnet sein. Auch durch eine solche Anordnung kann im Vergleich zum Stand der Technik bereits ein vergrößerter Abstand zwischen der ersten Sensoranordnung und einer Trajektorie, die das zweite Streugut nach dem Austritt aus der zweiten Ausbringvorrichtung beschreibt, mit den oben beschriebenen Vorteilen erreicht werden. Die erste Sensoranordnung und die zweite Sensoranordnung können dazu konfiguriert sein, in unterschiedlichen Zeitfenstern zu messen. Insbesondere können die Zeitfenster dabei nicht überlappen. Insbesondere in dem Fall, in dem die erste und die zweite Sensoranordnung jeweils einen Sensor umfassen, der auf der Reflexion von Schallwellen oder elektromagnetischen Wellen, insbesondere nach dem Dopplerprinzip, arbeitet, kann somit vermieden werden, dass Signale, die von der zweiten Sensoranordnung ausgesendet, von der ersten Sensoranordnung detektiert werden, insbesondere nach dem sie an dem zweiten Streugut reflektiert wurden, und umgekehrt. So wird eine Beeinträchtigung der ersten Sensoranordnung durch Signale, die von der zweiten Sensoranordnung ausgehen, vermieden, und umgekehrt.

Die Länge jeweiligen Zeitfenster kann dabei abhängig von mindestens einem Betriebsparameter der ersten und/oder zweiten Ausbringvorrichtung bestimmt werden. Insbesondere kann die Länge der jeweiligen Zeitfenster in Abhängigkeit des mindestens einen Betriebsparameter derart bestimmt werden, dass innerhalb eines Zeitfensters mindestens ein von einer Ausgabevorrichtung abgeworfenes Paket von Streugut komplett erfasst werden kann. Insbesondere kann unter einem Paket von Streugut hierbei die Menge an Streugut verstanden werden, die von einer Wurfschaufel einer Streuscheibe der ersten und/oder zweiten Ausbringvorrichtung währen einer Umdrehung der Streuscheibe ausgeworfen wird. Der mindestens eine Betriebsparameter kann insbesondere eine Drehzahl einer Streuscheibe der ersten und/oder zweiten Ausbringvorrichtung umfassen.

Die Zeitfenster können eine Länge von 0,1 s bis 10 s, vorzugsweise von 0,5 s bis 2 s, aufweisen. Mit einer solchen Länge der Zeitfenster kann sichergestellt werden, dass sowohl an dem ersten als auch dem zweiten ausgebrachten Streugut eine ausreichende Zahl von Messungen während des Ausbringvorgangs genommen werden kann, um die Streuwerte des jeweiligen Streuguts präzise erfassen zu können. Weiterhin kann mit Zeitfenstern dieser Länge, insbesondere mit einer Länge von 0,5 s bis 2 s, eine lückenlose Erfassung des ersten und des zweiten Streuguts auch bei einer alternierenden Messung erreicht werden.

Die erste Sensoranordnung und die zweite Sensoranordnung können dazu ausgebildet sein, mit unterschiedlichen Messfrequenzen und/oder unterschiedlichen Polarisationen zu messen. Durch eine solche Konfiguration kann verhindert werden, dass Signale, die von der ersten Sensoranordnung ausgesendet werden, die zweite Sensoranordnung beeinflussen, und umgekehrt.

Das landwirtschaftliche Gerät kann weiterhin einen oder mehrere Vorratsbehälter für das erste Streugut und das zweite Streugut umfassen.

Die Erfindung stellt weiterhin ein Verfahren zum Betrieb eines landwirtschaftlichen Geräts zur Verfügung, wobei das landwirtschaftliche Gerät eines oder mehrere der oben beschriebenen Merkmale aufweist. Das Verfahren umfasst die folgenden Schritte:
- Ausbringen eines ersten Streuguts durch die erste Ausbringvorrichtung;
- Ausbringen eines zweiten Streuguts einer durch die zweite Ausbringvorrichtung;
- Erfassen des ausgebrachten ersten Streuguts durch eine erste Sensoranordnung zur Bestimmung eines Streufächers; und
- Erfassen des ausgebrachten zweiten Streuguts durch eine zweite Sensoranordnung zur Bestimmung eines Streufächers.

Das Verfahren kann weiterhin die Verarbeitung von Daten umfassen, die von der ersten Sensoranordnung und/oder der zweiten Sensoranordnung an eine Steuervorrichtung des landwirtschaftlichen Geräts übermittelt werden. Die Daten können insbesondere die erfassten Streuwerte des ausgebrachten ersten Streuguts und/oder des ausgebrachten zweiten Streuguts und/oder von den erfassten Streuwerten abgeleitete Daten umfassen.

Das Verfahren kann weiterhin ein Ansteuern der ersten und/oder zweiten Ausbringvorrichtung durch eine Steuervorrichtung des landwirtschaftlichen Geräts umfassen. Das Ansteuern der ersten und/oder zweiten Ausbringvorrichtung kann insbesondere aufgrund der Verarbeitung der erwähnten Daten erfolgen, die von der ersten Sensoranordnung und/oder der zweiten Sensoranordnung an eine Steuervorrichtung des landwirtschaftlichen Geräts übermittelt werden.

Das Verfahren kann weiterhin den Vergleich von erfassten Streuwerten des ausgebrachten Streuguts der ersten Streugutsorte und/oder der zweiten Streugutsorte mit Sollwerten durch die Steuervorrichtung des landwirtschaftlichen Geräts umfassen. Es ist möglich, dass ein Ansteuern der ersten und/oder zweiten Ausbringvorrichtung durch die Steuervorrichtung aufgrund von festgestellten Abweichungen der erfassten Eigenschaften des ausgebrachten Streuguts der ersten Streugutsorte und/oder der zweiten Streugutsorte von Sollwerten erfolgt.

### Kurzbeschreibung der Zeichnungen

Weitere Merkmale und Vorteile der Erfindung werden nachfolgend anhand der beispielhaften Figuren erläutert. Dabei zeigt:
- Figur 1: schematisch ein landwirtschaftliches Gerät aus dem Stand der Technik in Seitenansicht;
- Figur 2: schematisch eine Ausführungsform eines landwirtschaftlichen Geräts in Seitenansicht; und
- Figur 3: schematisch eine Ausführungsform eines landwirtschaftlichen Geräts in Seitenansicht.

### Detaillierte Beschreibung

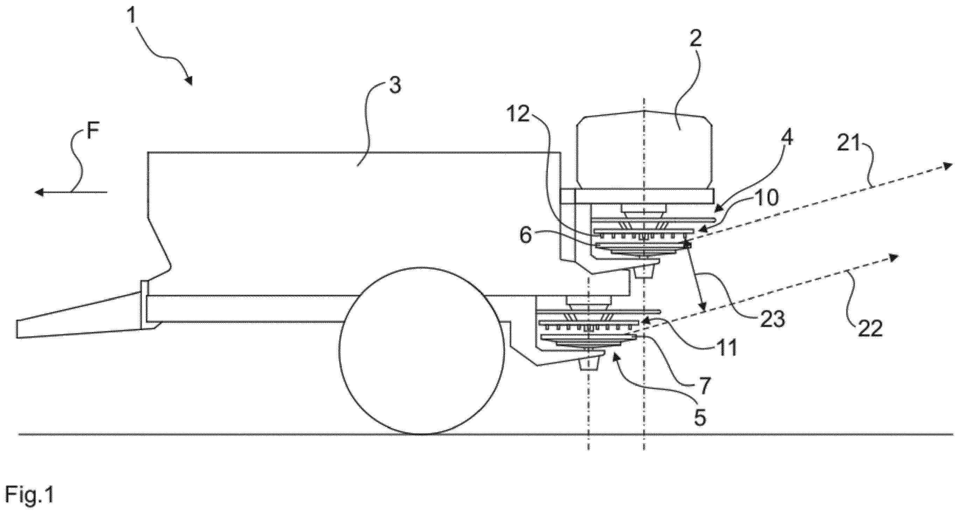

Figur 1 zeigt schematisch eine Seitenansicht eines landwirtschaftlichen Geräts 1 gemäß dem Stand der Technik, bei dem es sich um einen gezogenen Schleuderstreuer handelt. Der Schleudersteuer 1 umfasst einen ersten Vorratsbehälter 2 für eine erste Streugutsorte und einen zweiten Vorratsbehälter 3 für eine zweite Streugutsorte. Weiterhin umfasst der Schleuderstreuer 1 eine erste Ausbringvorrichtung 4 und eine zweite Ausbringvorrichtung 5.

Die erste Ausbringvorrichtung 4 ist mit dem ersten Vorratsbehälter 2 verbunden, so dass Streugut aus dem ersten Vorratsbehälter 2 mittels der ersten Ausbringvorrichtung 4 ausgebracht werden kann. Entsprechend ist die zweite Ausbringvorrichtung 5 mit dem zweiten Vorratsbehälter 3 verbunden, so dass Streugut aus dem zweiten Vorratsbehälter 3 mittels der zweiten Ausbringvorrichtung 5 ausgebracht werden kann.

In Figur 1 ist zu sehen, dass die erste Ausbringvorrichtung 4 und die zweite Ausbringvorrichtung 5 jeweils zumindest eine Streuscheibe 6 bzw. 7 umfassen. Insbesondere können die erste Ausbringvorrichtung 4 und die zweite Ausbringvorrichtung 5 jeweils zwei Streuscheiben umfassen. Im Betrieb des Schleuderstreuers 1 wird den Streuscheiben 6 bzw. 7 jeweils über eine in Figur 1 nicht dargestellte Dosiervorrichtung der ersten Ausbringvorrichtung 4 bzw. der zweiten Ausbringvorrichtung 5 Streugut der ersten bzw. der zweiten Streugutsorte zugeführt. Das jeweilige Streugut wird dann über die Streuscheiben 5 und 6 in bekannter Art und Weise ausgebracht.

Figur 1 zeigt weiterhin, dass der Schleuderstreuer 1 eine erste Sensoranordnung 10 und eine zweite Sensoranordnung 11 umfasst. Dabei ist die erste Sensoranordnung 10 an der ersten Ausbringvorrichtung 4 angeordnet, und die zweite Sensoranordnung 11 ist an der zweiten Ausbringvorrichtung 6 angeordnet. Die erste Sensoranordnung 10 und die zweite Sensoranordnung 11 umfassen jeweils Radarsensoren 12, mit denen Streugut, das aus der ersten Ausbringvorrichtung 4 bzw. aus der zweiten Ausbringvorrichtung 5 ausgeworfen wird, erfasst werden kann. Bei dem in Figur 1 dargestellten Schleudersteuer sind die Radarsensoren 12 oberhalb der Streuscheiben 6 und 7 angeordnet. Im dem Fall, dass die erste Ausbringvorrichtung 4 und die zweite Ausbringvorrichtung 5 jeweils mehrere, insbesondere zwei, Streuscheiben aufweisen, kann jeder Streuscheibe eine Gruppe von Radarsensoren 12 zugeordnet sein.

Es ist in Figur 1 zu erkennen, dass die erste Ausbringvorrichtung 4 und die erste Sensoranordnung 10 oberhalb und in Fahrtrichtung F des Schleuderstreuers 1 nach hinten versetzt zu der zweiten Ausbringvorrichtung 5 angeordnet sind.

Die Pfeile 21 und 22 bezeichnen die anfänglichen Flugrichtungen von Streugut, das aus der ersten Ausbringvorrichtung 4 ausgebracht wird, bzw. von Streugut, das aus der zweiten Ausbringvorrichtung 5 ausgebracht wird. Der Doppelpfeil 23 zeigt den Abstand zwischen einem Radarsensor 12 der ersten Sensoranordnung und der Flugrichtung 22 der zweiten Streugutsorte an.

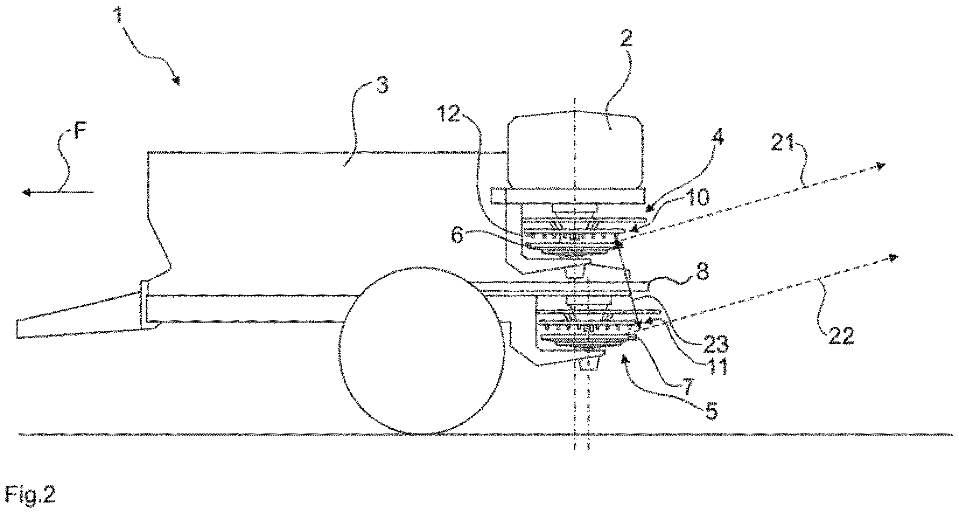

Figur 2 zeigt eine Ausführungsform des landwirtschaftlichen Geräts 1 gemäß der vorliegenden Erfindung, bei dem es sich um einen gezogenen Schleuderstreuer handelt. In Figur 2 bezeichnen die gleichen Bezugszeichen die gleichen Komponenten wie in Figur 1. Es ist zu erkennen, dass, im Gegensatz zu dem in Figur 1 gezeigten Schleuderstreuer des Stands der Technik, in der in Figur 2 gezeigten Ausführungsform die erste Ausbringvorrichtung 4 und die erste Sensoranordnung 10 oberhalb und in Fahrtrichtung F des Schleuderstreuers 1 nach vorne versetzt zu der zweiten Ausbringvorrichtung 5 angeordnet sind.

Es ist deutlich zu erkennen, dass der Abstand 23 zwischen einem Radarsensor 12 und der Flugrichtung 22 der zweiten Streugutsorte im Vergleich zum Stand der Technik deutlich vergrößert ist. Dadurch wird eine Erfassung der zweiten Streugutsorte durch die erste Sensoranordnung 10 unterdrückt.

Weiterhin umfasst die in Figur 2 gezeigte Ausführungsform ein Trennelement 8, das in vertikaler Richtung zwischen der ersten Ausbringvorrichtung 4 und der zweiten Ausbringvorrichtung 5 angeordnet ist und sich zumindest teilweise in Fahrtrichtung F erstreckt. Das Trennelement 8 ist in der gezeigten Ausführungsform als Scheibe ausgebildet und umfasst ein Material, welches Radarwellen absorbiert. Es ist zu erkennen, dass das Trennelement 8 zumindest die Sicht eines Teils der Radarsensoren 12 der ersten Sensoranordnung 10 auf die Flugrichtung 22 der zweiten Streugutsorte verdeckt.

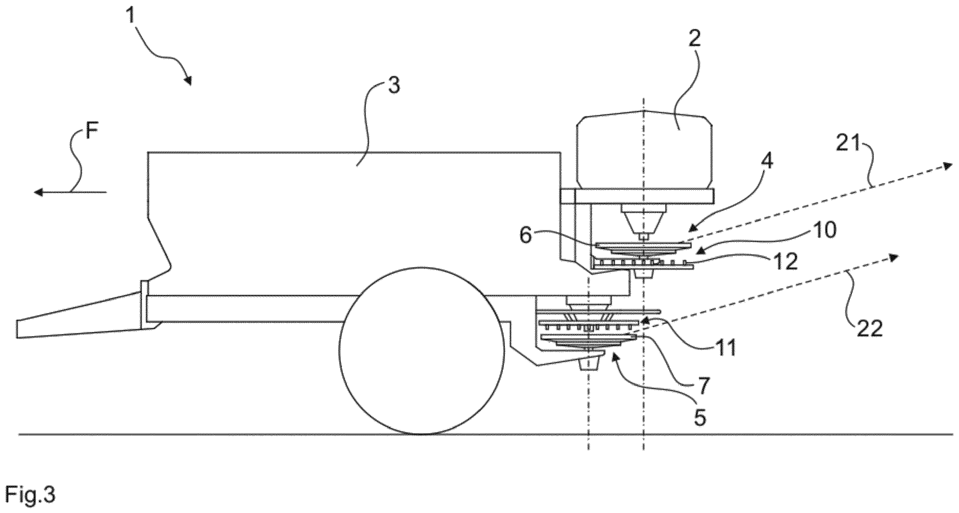

Figur 3 zeigt schematisch eine weitere Ausführungsform des landwirtschaftlichen Geräts 1 gemäß der vorliegenden Erfindung, bei dem es sich um einen Schleuderstreuer handelt. In Figur 3 sind die gleichen Komponenten wie in Figur 1 und Figur 2 mit den gleichen Bezugszeichen versehen.

In Figur 3 sind die erste Ausbringvorrichtung 4 und die erste Sensoranordnung 10 ebenfalls oberhalb von der zweiten Ausbringvorrichtung 5 angeordnet. Jedoch ist, im Gegensatz zu dem in Figur 1 gezeigten Schleuderstreuer, die erste Sensoranordnung 10 mit ihren Radarsensoren 12 unterhalb der Streuscheibe 6 der ersten Ausbringvorrichtung 4 angeordnet. Damit weist eine Messrichtung der Radarsensoren 12 der ersten Sensoranordnung 10 also von der Flugrichtung 22 der zweiten Streugutsorte weg.

Die zweite Sensoranordnung 11 ist mit ihren Radarsensoren 12 wie in Figur 1 oberhalb der Streuscheibe 7 der zweiten Ausbringvorrichtung angeordnet. Damit weisen die Messrichtungen der ersten Sensoranordnung 10 und der zweiten Sensoranordnung 11 also voneinander weg. Damit wird vermieden, dass Radarwellen, die von der zweiten Sensoranordnung 11 ausgesendet werden und von Streugut der zweiten Streugutsorte reflektiert werden, von den Radarsensoren 12 der ersten Sensoranordnung 10 detektiert werden. Analog gilt, dass bei einer solchen Anordnung Radarwellen, die von der ersten Sensoranordnung 10 ausgesendet werden und von Streugut der ersten Streugutsorte reflektiert werden, nicht von den Radarsensoren 12 der zweiten Sensoranordnung 11 detektiert werden.

Es ist anzumerken, dass bei der in Figur 3 gezeigten Ausführungsform die erste Ausbringvorrichtung 4 und die erste Sensoranordnung 10 beispielhaft oberhalb und in Fahrtrichtung F des Schleuderstreuers 1 nach hinten versetzt von der zweiten Ausbringvorrichtung 5 angeordnet sind. Diese Ausführungsform ist jedoch nicht auf diese spezielle Anordnung der Ausbringvorrichtungen beschränkt. Vielmehr kann die in Figur 3 gezeigte Anordnung der Radarsensoren 12 auch, beispielsweise, mit der in Figur 2 gezeigten Anordnung der Ausbringvorrichtungen kombiniert werden.

Die Radarsensoren 12 der ersten und der zweiten Ausbringvorrichtung können dazu eingerichtet sein, mit unterschiedlichen Frequenzen und/oder Polarisationen zu messen. Damit kann vermieden werden, dass Radarwellen, die von der zweiten Sensoranordnung 11 ausgesendet werden, von Streugut der zweiten Streugutsorte reflektiert werden und dann auf einen Radarsensor 12 der ersten Sensoranordnung 10 treffen, von diesem registriert werden.

Das landwirtschaftliche Gerät 1 kann weiterhin eine Steuerungsvorrichtung umfassen, die in den Figuren 2 und 3 nicht gezeigt ist, beispielsweise einen Bordrechner des landwirtschaftlichen Geräts 1 oder eines Zugfahrzeugs des landwirtschaftlichen Geräts 1. Die Steuerungsvorrichtung kann steuerungstechnisch mit der ersten Ausbringvorrichtung 4, der zweiten Ausbringvorrichtung 5, der ersten Sensoranordnung 10 und der zweiten Sensoranordnung 11 verbunden sein.

Die Steuervorrichtung kann dazu eingerichtet sein, Streuparameter der ersten Ausbringvorrichtung 4 und der zweiten Ausbringvorrichtung 5 basierend auf den Messungen der der ersten Sensoranordnung 10 und der zweiten Sensoranordnung 11 anzupassen. Insbesondere kann die Steuervorrichtung die Messergebnisse der ersten Sensoranordnung 10 und der zweiten Sensoranordnung 11 mit hinterlegten Sollparametern vergleichen, die einem gewünschten Streubild entsprechen. Bei einer Abweichung der Messergebnisse von den Sollparametern kann die Steuervorrichtung die Streuparameter so anpassen, dass das gewünschte Streubild erzielt wird.

Die Steuervorrichtung kann weiterhin dazu eingerichtet sein, die erste Sensoranordnung 10 und die zweiten Sensoranordnung 11 so anzusteuern, dass sie in jeweils unterschiedlichen Zeitfenstern messen. Beispielsweise kann die Steuervorrichtung eine Messung der ersten Sensoranordnung 10 zum Zeitpunkt t0 starten und zu einem Zeitpunkt t1 = t0 + Δt beenden, und eine Messung der zweiten Sensoranordnung 11 zum Zeitpunkt t1 starten und zum Zeitpunkt t2 = t1 +Δt beenden. Mit anderen Worten kann beispielsweise eine Erfassung des ersten Streuguts im Zeitintervall [t0; t1] und eine Erfassung des zweiten Streuguts im Intervall [t1; t2] erfolgen. Der Wert von Δt kann zwischen 0,1 s und 10 s, insbesondere zwischen 0,5 s und 2 s, betragen.

## Patentansprüche

1. Landwirtschaftliches Gerät (1) zum Ausbringen von Streugut, wie beispielsweise Dünger und/oder Saatgut, umfassend:
eine erste Ausbringvorrichtung (4) für ein erstes Streugut;
eine zweite Ausbringvorrichtung (5) für ein zweites Streugut;
eine erste Sensoranordnung (10), die dazu ausgebildet ist, zur Bestimmung eines Streugutfächers das erste Streugut zu erfassen, das von der ersten Ausbringvorrichtung (4) ausgebracht wird; und
eine zweite Sensoranordnung (11), die dazu ausgebildet ist, zur Bestimmung eines Streugutfächers das zweite Streugut zu erfassen, das von der zweiten Ausbringvorrichtung (5) ausgebracht wird;
wobei die erste Ausbringvorrichtung (4) oberhalb der zweiten Ausbringvorrichtung (5) angeordnet ist, und
wobei die erste Sensoranordnung (10) so angeordnet und/oder ansteuerbar ist, dass eine Erfassung des zweiten Streuguts durch die erste Sensoranordnung (10) unterdrückt wird und/oder wobei die zweite Sensoranordnung (11) so angeordnet und/oder ansteuerbar ist, dass eine Erfassung des ersten Streuguts durch die zweite Sensoranordnung (11) unterdrückt wird.

2. Landwirtschaftliches Gerät (1) gemäß Anspruch 1,
wobei die erste Sensoranordnung (10) oberhalb und in Fahrtrichtung (F) des landwirtschaftlichen Geräts (1) nach vorne versetzt zu der zweiten Ausbringvorrichtung (5) angeordnet ist.

3. Landwirtschaftliches Gerät (1) gemäß Anspruch 2, wobei der Versatz in Fahrtrichtung (1) zwischen der ersten Sensoranordnung (10) und der zweiten Ausbringvorrichtung (5) zwischen 0,1 m und 2,5 m, insbesondere zwischen 0,3 m und 1,5 m beträgt.

4. Landwirtschaftliches Gerät (1) gemäß einem der vorangehenden Ansprüche, weiterhin umfassend:
eine Trennelement (8), das zwischen der ersten Ausbringvorrichtung (4) und der zweiten Ausbringvorrichtung (5) angeordnet ist.

5. Landwirtschaftliches Gerät (1) gemäß Anspruch 4 wobei das Trennelement (8) ein Material umfasst, das intransparent für elektromagnetische Wellen, insbesondere Radarwellen, und/oder Schallwellen, insbesondere Ultraschallwellen, ist.

6. Landwirtschaftliches Gerät (1) gemäß einem der Ansprüche 4 oder 5, wobei sich das Trennelement (8) über die gesamte Maschinenbreite des landwirtschaftlichen Geräts erstreckt.

7. Landwirtschaftliches Gerät (1) gemäß einem der vorangehenden Ansprüche,
wobei die erste Sensoranordnung (10) so angeordnet ist, dass eine Messrichtung der ersten Sensoranordnung (10) von unten nach oben verläuft.

8. Landwirtschaftliches Gerät (1) gemäß einem der vorangehenden Ansprüche,
wobei die erste Sensoranordnung (10) und die zweite Sensoranordnung (11) dazu konfiguriert sind, in unterschiedlichen Zeitfenstern zu messen.

9. Landwirtschaftliches Gerät (1) gemäß Anspruch 8, wobei die jeweiligen Zeitfenster eine Länge von 0,1 s bis 10 s, insbesondere von 0,5 s bis 2 s, aufweisen.

10. Landwirtschaftliches Gerät (1) gemäß einem der vorangehenden Ansprüche, wobei die erste Sensoranordnung (10) und/oder die zweite Sensoranordnung (11) dazu ausgebildet sind, Streugut optisch und/oder mittels Reflexion von elektromagnetischen Wellen und/oder Schallwellen zu erfassen.

11. Landwirtschaftliches Gerät (1) gemäß einem der vorangehenden Ansprüche wobei die erste Sensoranordnung (10) und/oder zweite Sensoranordnung (11) mindestens einen Schallsender, insbesondere einen Ultraschallsender und einen entsprechenden Empfänger oder einen Sender für elektromagnetische Wellen, insbesondere Radarwellen und einen entsprechenden Empfänger umfassen.

12. Landwirtschaftliches Gerät (1) gemäß einem der vorangehenden Ansprüche, wobei die erste Sensoranordnung (10) und die zweite Sensoranordnung (11) dazu ausgebildet sind mit unterschiedlichen Messfrequenzen und/oder unterschiedlichen Polarisationen zu messen.

13. Verfahren zum Betrieb eines landwirtschaftlichen Geräts (1) nach einem der vorangehenden Ansprüche, umfassend:
Ausbringen eines ersten Streuguts durch die erste Ausbringvorrichtung (4);
Ausbringen eines zweiten Streuguts einer durch die zweite Ausbringvorrichtung (5);
Erfassen des ausgebrachten ersten Streuguts durch eine erste Sensoranordnung zur Bestimmung eines Streufächers; und
Erfassen des ausgebrachten zweiten Streuguts durch eine zweite Sensoranordnung zur Bestimmung eines Streufächers.
